Europäisches Patentamt

European Patent Office

Office européen des brevets

(19)

(11) Publication number: **0 026 108**
**A2**

(12) **EUROPEAN PATENT APPLICATION**

(21) Application number: **80303354.7**

(22) Date of filing: **24.09.80**

(51) Int. Cl.³: **G 01 J 1/44**

(30) Priority: **24.09.79 US 78396**

(43) Date of publication of application:
**01.04.81 Bulletin 81/13**

(84) Designated Contracting States:
**BE CH DE FR GB IT LI LU NL SE**

(71) Applicant: **PFIZER INC.**
**235 East 42ND Street**
**New York, N.Y. 10017(US)**

(72) Inventor: **Bax, Ronald Frank**
**5592 Eaglebeak Row**
**Columbia Maryland(US)**

(74) Representative: **Pennant, Pyers et al,**
**Stevens, Hewlett & Perkins 5 Quality Court Chancery**
**Lane**
**London, WC2A 1HZ(GB)**

(54) **Apparatus, circuit and method for compensating the dark current of photoelectric transducers.**

(57) A sample and hold auto-zeroing feedback circuit (22) is utilized to drive the dark current of a solid state photodiode (10) to zero in the absence of incident light photons. The just previously attained compensation is then held during a subsequent quantitative measurement cycle when the photodiode is illuminated. A plurality of linear (24) and/or nonlinear (28) signal processing stages may also be included within the auto-zero compensation feedback loop such that their normal offset errors are also simultaneously compensated.

./...

EP 0 026 108 A2

# Fig. 2

0026108

## "APPARATUS, CIRCUIT AND METHOD FOR COMPENSATING THE DARK CURRENT OF PHOTOELECTRIC TRANSDUCERS"

This invention generally relates to the compensation of offset errors introduced into quantitative light photon measurements using normally available photoelectric transducers (e.g., silicon photodiodes) and imperfect amplifier circuits which introduce further offset errors. The invention is particularly useful in applications such as CT scanners where a photoelectric transducer is repetitively illuminated with successive bursts of light photons separated by intervening dark periods during which an auto-zeroing feedback loop can be activated.

It is well-known that photoelectric transducers such as silicon diodes have so-called "dark currents" which flow whenever a voltage is applied across the diode in spite of the fact that there are no incident light photons. If the dark current is only a small fration of the expected signal current then it may sometimes be ignored. However, when the dark current becomes appreciable as compared to the signal level that is to be measured, then it must be taken into account.

At small values of impressed voltage (less than 10 millivolts) the leakage current of a silicon photodiode is simply the voltage E applied to the diode, divided by the resistance $R_{sh}$ of the diode itself. An attempt is usually made to maximize $R_{sh}$ by selection of silicon, and by using proper processing techniques during manufacture.

For a large area $(60mm^2)$ diode the value of $R_{sh}$ may be 1 to 100 megohms. A typical value is 10 megohms.

BAD ORIGINAL

Such photodiodes are usually connected to analog amplifier circuits for typical applications. These amplifiers almost always have quiescent input offset voltages which cause photodiode dark currents to flow. Such offset errors are usually variable with respect to temperature or other parameters.

Typically, op-amps can be obtained having input offset voltages of approximately 1-10 millivolts, and can range to as low as tens of microvolts for premium chopper-stabilized or commutating auto-zero amplifiers. The price is high, however for the lower offset voltages. A low-cost (LF356) type of amplifier, or a discrete field effect monolithic pair, has an offset voltage approaching the neighborhood of 5 millivolts. Five millivolts offset divided by 10 megohms ($R_{sh}$) gives a dark current of 0.5 nanoamperes at 25°c. At 35°c the dark current doubles to 1 nanoampere.

One typical prior art approach is to use a fixed offsetting d.c. signal to "buck" the unwanted dark current term. Another prior art approach is to "chop" the photodiode signal and to follow that with a.c. processing circuits thus losing the unwanted d.c. term which includes the dark current error. However, both of these prior art techniques suffer from serious practical disadvantages.

For example, the normal silicon photodiode dark current is a very sensitive function of temperature (e.g., 7% per degree C.) thus causing the offsetting or bucking d.c. signal to soon lose its effectiveness unless the temperature of the photodiode is very closely controlled or unless some attempt is made to track the offsetting d.c. signal with respect to temperature. If one were to simply

BAD ORIGINAL

buck out the dark currents at $25^{\circ}c$, and elevate the temperature by $10^{\circ}c$, another 0.5 nanoamperes of dark current would re-appear. In any event, when the dark current grossly exceeds the signal level to be measured, d.c. bucking techniques are usually unsatisfactory.

Furthermore, even where the dark current term is filtered out by a.c. processing, the processing circuits are required to have larger bandwidth than d.c. amplifiers which could otherwise be used and of course, fairly elaborate synchronous or asynchronous demodulation circuits must be employed at some point in the process.

In C.T. scanner applications, maximum photodiode signal levels approach several hundred nanoamperes. When scanning large bodies, signal levels can be as low as several picoamperes. Given perfect initial removal of dark current, even a change of $0.1^{\circ}c$, during a scan, can cause a 50 picoamp shift in diode dark current, and an unacceptable non-linearity exceeding 1000%. The non-linearity causes effective compression gain in subsequent logarithmic amplifiers, and loss of intensity resolution when small signals are processed. It is thus imperative to remove as much of the dark current as possible.

In accordance with a first aspect of the invention there is provided apparatus for reducing errors in photon measurements made with a photoelectric transducer having a variable offset component in its output electrical signal and which transducer is sometimes exposed to a source of photons, said apparatus comprising: a signal amplifier circuit having an input connected to receive the electrical output signal of said photoelectric

BAD ORIGINAL

transducer, including said variable offset component and to provide a corresponding output, and a sample-and-hold feedback circuit connected to receive the output of said signal amplifier circuit and to sample same only during periods when said transducer is not exposed to said source of photons and to thereafter provide and maintain a respectively corresponding output feedback signal during periods when the transducer is exposed to the source of photons, said sample-and-hold feedback circuit having its output signal connected to control said signal amplifier circuit such that its output is compensated for said variable offset component.

The sample and hold automatic-zeroing compensation feedback loop can be used to reduce the photodiode leakage or dark current by several orders of magnitude. Preferably substantially all the applied voltage is removed from the photodiode. Furthermore, one or more stages of linear and/or nonlinear signal processing stages may be included within the loop to simultaneously compensate for their offset errors which may be somewhat similar to the photodiode dark current error. Such compensation is especially important where logarithmic processing is performed on the photodiode signal since even small dark current errors cause a rather large error in the resulting logarithmic measurement.

In accordance with a second aspect of the invention there is provided a method of compensating for the temperature sensitive dark current component of the electrical signal of a photodiode, said method comprising the steps of: generating an output electrical signal as a function of both the photodiode electrical signal and

BAD ORIGINAL

at least one compensation signal, generating said compensation signal as a function of said photodiode electrical signal during a time when the photodiode is dark so as to then substantially compensate for erroneous components thereof, maintaining the just previously attained value of said compensation signal when the photodiode is illuminated, and periodically repeating the above steps in synchronism with illumination of said photodiode during successive time intervals.

The method of this invention can eliminate substantially all of the unwanted leakage or dark current by forcing a silicon diode to operate at near zero applied potential. The automatic zeroing or nulling technique employed by this invention also eliminates many of the noise and bandwidth problems encountered with synchronous demodulation of a.c. "chop" signals.

In general, this invention takes advantage of the fact that offset errors such as associated with photodiode dark currents, related thermal effects, etc. are relatively slowly varying as compared to the period of rapidly succeeding measurement cycles such as often encountered in instruments such as CT scanners. In such environments, where thermal effects and other causes of offsetting errors are relatively slow (having time constants in the millisecond range), it has been found satisfactory to use an even slower, closed loop, sample and hold automatic nulling or zeroing compensation loop.

At predetermined times in the normal measurement cycle, incident light is removed from the photodiode. During this dark time period, the only output from the photodiode is the unwanted dark current term.

BAD ORIGINAL

Additionally, the offset errors introduced by other components in the signal processing circuit are also then isolated from any meaningful signal level. An overall auto-zeroing compensation loop then generates a compensating signal which reduces the error term to an insignificant level. When signal processing is again required (i.e. when incident light is again present at the photodiode), the compensation loop is temporarily opened but holds or "remembers" the just attained value of required compensating offset. Since the required degree of compensation should be approximately constant over the brief measurement cycle during which light is incident upon the photodiode, appropriate correction will be effected. As soon as the incident light is again removed from the photodiode, the auto-zero compensation loop is again enabled or closed so as to again re-zero in readiness for the next succeeding measurement cycle.

The memory employed for the auto-zero loop can be either analog or digital. For example, some analog memory devices are capacitors, motor-driven potentiometers, or other analog devices as will be appreciated by those in the art. Digital memory devices are also well-known to those in the art and often take the form of a digital register which drives a d/a converter. The actual memory device employed will vary depending upon the application, the required holding time, the required holding accuracy, the required acquisition speed for acquiring new data to be stored and/or the speed with which it is required to clear the memory device of previously stored data.

In accordance with a third aspect of the

BAD ORIGINAL

invention there is provided a light measuring photodiode circuit imposing substantially zero, said circuit comprising: a photodiode, an amplifier circuit having an input connected across said photodiode and having an offset input voltage drop at said input and thus appearing across said photodiode which can be controlled in magnitude to be substantially zero by a provided compensating input signal, said amplifier circuit also having an output providing a light measurement signal, and a sample-and-hold integrator circuit connected to sample the light measurement signal when the photodiode is not illuminated and to provide said compensating input signal at a magnitude so as to cause said offset input voltage to be substantially zero, said sample-and-hold integrator circuit thereafter substantially maintaining said compensating input signal at its last attained value when the photodiode is illuminated. Preferably said amplifier circuit comprises a nonlinear amplifier having a logarithmic-related transfer function.

In certain photometric applications, and with respect to CT scanning applications in particular, the measured signals also pass through a logarithmic amplifier or log ratioing stage. For example, the logarithmic characteristic or transfer function of such an amplifier is used to linearize the exponentiated term involved in the measurement of X-ray absorption values. That is, in a CT scanner environment, the photodiode signal current is proportional to the incident light photons from a scintillator crystal which is, in turn, proportional to the indident X-ray flux. The incident flux is related to the flux output from a source multiplied by an exponential factor including the integration of the attenuation constants associated with the incremental volumes of materials through which the X-rays have passed on their way from an X-ray tube to a scintillator crystal. A log ratio operation is often used in a CT scanner environment to normalize for X-ray source intensity variations as will be appreciated. A log subtraction is performed using the detected signal and a reference version of the X-ray (or light) source. Such log subtraction is analogous to division or normalization techniques that are well-known in the art.

By including the logarithmic amplifier stage within the auto-zero compensation loop described above, a fixed percentage change in the input signal always produces a fixed output change, regardless of the absolute signal level. That is, at low signal levels, the total loop gain increases (because of the included logarithmic amplifier) thus causing this desired effect. The overall loop gain in such situations is approximately equal to the inverse of the input signal level. Furthermore, variable (and/or fixed) offsets in the incoming photodiode signal (and in the input of the log amplifier itself), are much more significant at lower signal levels. If the log amplifier were not included in the auto-zero loop as just described, then these offsets would produce a much larger

BAD ORIGINAL

logarithmic conformity error in the output since the output of the logarithmic amplifier would be proportional to the logarithm of the desired signal plus the unwanted and uncompensated offset signals.

In particular, in CT scanning applications where large X-ray absorption or attenuation is encountered, the desired signal levels which must be accurately and quantitatively measured, maybe as little as 1% of the normally present dark current of a silicon photodiode. For example, a signal component might be only 1 millivolt while the dark current component would be on the order 100 millivolts. Under these conditions, the output of the uncompensated logarithmic amplifier can be in error by as much as 10,000%! However, when the logarithmic amplifier is included within the auto-zero loop of this invention, the larger the nominal expected error, the more information is available with which to correct the error! Accordingly, it has been discovered that it is possible to reduce errors of this kind by as much as four orders of magnitude using this invention.

These and other objects and advantages of the invention will be more completely understood by reading the following detailed description of the presently preferred exemplary embodiment of this invention in conjunction with the accompanying drawings, of which:

FIGURE 1 is a block schematic diagram of the presently preferred embodiment of this invention;

FIGURE 2 is a more detailed block schematic diagram of the embodiment of FIGURE 1;

BAD ORIGINAL

FIGURE 3 is a detailed schematic diagram of the presently preferred exemplary embodiment of this invention as shown in FIGURES 1 and 2;

FIGURE 4 is a detailed schematic diagram of an alternate embodiment for a portion of the circuitry shown in FIGURE 3; and

FIGURE 5 is a signal timing diagram useful in explaining the operation of the circuitry shown in FIGURE 3.

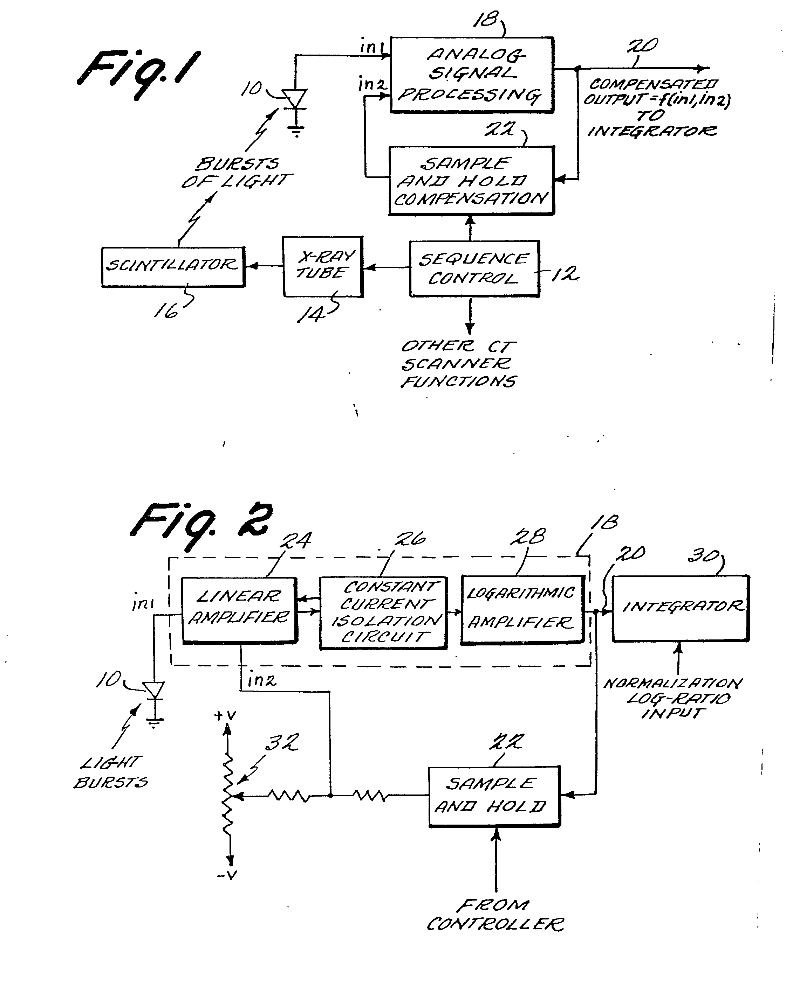

Referring first to FIGURE 1, a silicon photodiode 10 is shown as used in a CT scanner application. The usual CT scanner sequence control 12 pulses a source of X-ray flux 14 (e.g. an X-ray tube) in synchronism with mechanical movements of the CT scanner and/or causes the X-ray source 14 to rotate (mechanically or electrically) or otherwise move so as to sequentially activate various scintillator crystals 16 which are, in turn, in light communication with respectively corresponding photodiode PN junctions. As will be appreciated, the X-ray flux from source 14 will normally pass through various materials on its way to the scintillator including materials that are under X-ray measurement. Accordingly, in this application, it is usually desired to quantitatively measure the light photons incident upon the photodiode 10. Since the CT scanner sequence control 12, X-ray source 14, scintillator 16, etcetera are all of conventional design insofar as this invention is concerned, no further detailed description of these components should be required.

In accordance with this invention, analog

BAD ORIGINAL

0026108

signal processing circuits 18 are provided. The circuits accept two inputs, namely IN1 and IN2 and provide a compensated output at 20 which is a function of both the inputs. Typically, the output at 20 is applied to an integrator circuit and, from there, to analog-to-digital convertor circuits all as will be appreciated.

During dark periods (i.e. when the sequence control 12 has turned the X-ray source 14 "off"), the output signal on line 20 is connected in an auto-zero compensation feedback loop via the sample-and-hold compensation circuits 22 so as to supply the second input IN2 to the analog signal processing circuits 18. The first input IN1 comes directly from the photodiode 10.

During this dark period, the auto-zero compensation loop will drive the dark current of the photodiode 10 to zero. Thereafter, when the sequence control 12 turns the X-ray source 14 "on", the auto-zero feedback loop is disabled or opened. However, the sample-and-hold circuit 22 continues to "remember" the just attained level of compensation for IN2 and continues to maintain this same level of compensation throughout the next measurement cycle while the X-ray source 14 is "on". This cycle of operation is then again repeated whenever X-ray source 14 is turned off.

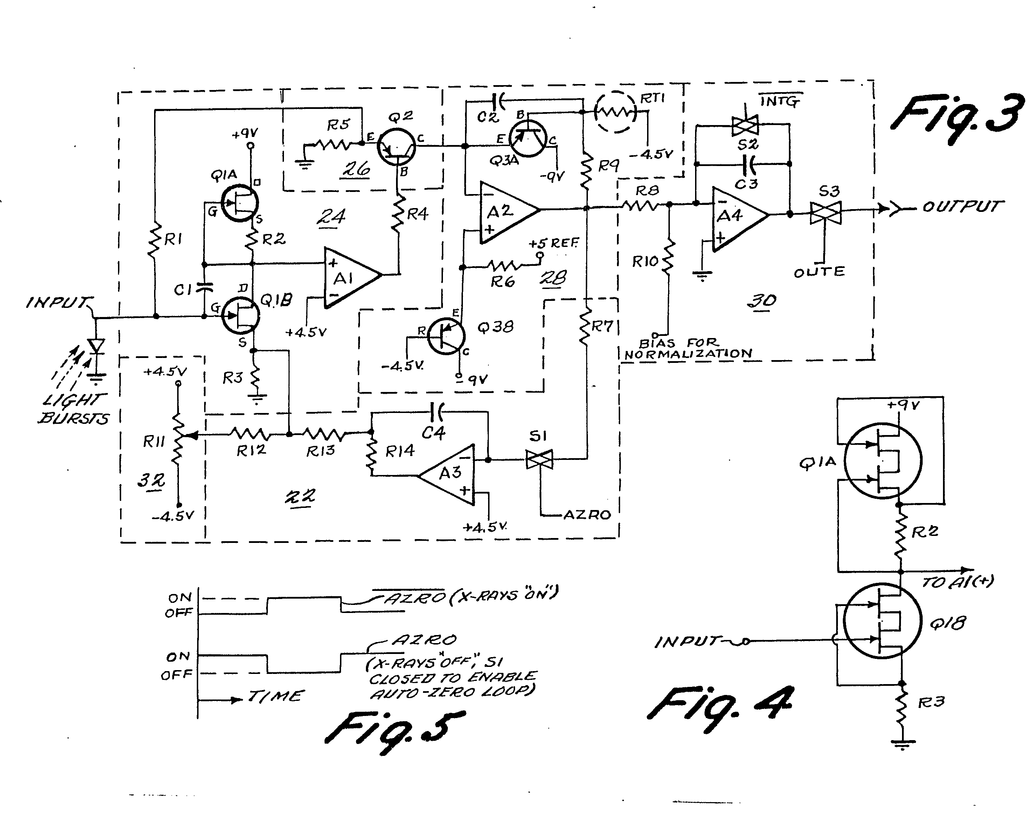

The analog processing circuit of FIGURE 1 is shown in slightly more detail at FIGURE 2. As seen there, the analog signal processing circuit 18 comprises a linear amplifier stage 24, a constant current impedance isolation circuit 26 and a logarithmic amplifier 28. An integrator stage 30 is also shown as is a potentiometer 32 connected so as to provide a quiescent value of IN2 selected to

BAD ORIGINAL

approximately compensate the circuitry at some predetermined operating condition. Such a manually adjustable selection of the quiescent compensation signal level makes it possible to use auto-zero loop components having a smaller required range of operation.

The presently preferred exemplary embodiment of this invention as already described in FIGURES 1 and 2 is shown in a detailed schematic circuit diagram form at FIGURE 3. In all FIGURES 1, 2 and 3, like reference numerals have been used to indicate corresponding elements.

Referring to FIGURE 3, Q1A and Q1B comprise a "totem-pole" preamplifier stage. The discrete F.E.T. devices are chosen for low noise, and tightly matched D.C. characteristics. Assuming that both devices are operating at zero volts gate-to-source two perfect F.E.T.'s would conduct equally, and exactly one-half of +9V, or +4.5 volts would be fed to the positive input of A1. This +4.5 volts is compared to the +4.5 volts at the negative or inverting input of A1 and the output of A1 provides base drive to Q2. Q2 will vary its emitter current until sufficient current flows through R5 to bias Q1B and create an equilibrium state. At equilibrium, the inputs of A1 will be such as to satisfy its input offset voltage requirements. The differential voltage at the inputs of A1 will typically be within a ±10 milli-volt band.

With the upper transistor, Q1A acting as a constant current load for Q1B, (a high impedance load approaching several megohms), the gain of Q1B is maximized, and is nominally several thousand (e.g. 2000). The overall open loop gain through Q1A, Q1B, A1, and Q2, is several million at D.C.

BAD ORIGINAL

(e.g. $4 \times 10^7$). The end result is that D.C. drift and noise due to A1 are negligible.

At equilibrium, the voltage which appears at the gate of Q1B, and thus across the photodiode, is simply the offset voltage of Q1B. This voltage can reside anywhere in the region of $\pm 5$ millivolts, and is the source of the photodiode dark current. Initially, R11 is adjusted to null out most of this offset. Typically the potentiometer is designed to provide a $\pm 18$ millivolt adjustment range. This reduces the requirements on amplifier A3 in the autozeroing operations to be described hereafter. Thus, R13 can be increased to a much larger value to decrease the droop effect due to C4 discharging in the hold mode.

With R13 equal to 300K, a shift of $\pm 5$ volts at the output of A3 will provide a nominal 1.6 millivolt shift at Q1B, to accommodate drift due to temperature, small supply changes, component aging, and shift in the output of R11 due to physical shock. In other words, it is only necessary to adjust R11 to the neighborhood of less than $\pm 100$ microvolts at the gate of Q1B. The auto-zero loop will take over from that point.

With the auto-zero loop operational, the only major source of bias to the photodiode is the gate-drain leakage of Q1B, times the parallel combination of R1, and $R_{sh}$ (of the diode). At 35°c, the diode bias may typically be approximately 100 microvolts and at 35°C, it would double to 200 microvolts. At 25°c, diode leakage current is thus typically 10 picoamperes. Instead of the original error band of $\pm 0.5$ nanoamperes of $\pm 500$ picoamperes, the reduction in error can be as much as 50/1 as shown.

BAD ORIGINAL

A lower gate leakage F.E.T. or use of Q1A and Q1B in a cascode configuration can reduce leakage further, if required as shown in FIGURE 4. There a dual-matched cascode F.E.T. is used for Q1A and Q1B. (e.g. National NQF 9406 or Intersil IT501.)

Once it is assumed that the input F.E.T. can be zeroed, there is the complication of voltage offset due to A2, the first log-amplifier stage. With another separate auto-zero loop or potentiometer, one could certainly zero A2, the logger. Either the preamplifier and logging must be done in one stage (it can be done) or in separate stages, where separate zeroing circuits are required. Use of one stage normally creates severe frequency compensation problems because of the large loop gain, and a large change in loop dynamics with signal change.

However it has now been discovered that one loop/potentiometer can be successfully used if the constant current stage Q2 also is provided. As states before, the emitter current of Q2 is used as the feedback to the F.E.T. input stage. The collector current of Q2 is simply the alpha of Q2 times the emitter current and alpha can be virtually equal to one as will be appreciated. Thus, almost the full emitter current of Q2 flows in its collector. The collector current, however, is relatively independent of the collector voltage of Q2. As those familiar to the art will see, the circuit is a constant current source for the input of A2. In essence, the entire input stage is a current/current amplifier, with a gain equal to the ratio of R1 and R2 (e.g. 1000).

BAD ORIGINAL

The presence of a current amplifier allows considerable simplification of the logger stage. A very accurate log ratio can be done with A2 and Q3, instead of the two or three amplifiers generally required for such performance. Also, since the logger stage is operating a high current (e.g. 100 micro amperes maximum, and 10 nanoamperes minimum) and the frequency compensation is simplified, it can be shown that the logger bandwidth can always be made greater than about 16 KHZ. This is considerably larger than the 1.6 Hertz bandwidth which might be obtained at minimum signal without the current gain of the input stage.

Logging is done in Q3A, with Q3B acting as a compensating element. If it is assumed that Q3B is supplied with the +5 REF voltage by a matched regulator transistor having an identical $V_{BE}$ drop, the current through R6 is a reference current $I_{REF}$ (e.g.100A). The log characteristic of Q3A then may result in an incremental charge in VBE of about 59.12 m.v. per decade change in $I_B$ of Q3A. The logger output scale factor can then be shown to be nominally 1.5v/decade (R9=24.3K and RT1=1K ohms).

The transfer equation of the logger is then:

$$E_O \quad -4.5v \quad - K \log_{10} \frac{I_{in}}{I_{REF}} \qquad \text{(Equation 1)}$$

$$\text{or } E_O \quad -4.5 \quad + K \log_{10} \frac{I_{REF}}{I_{in}} \qquad \text{(Equation 2)}$$

where $I_{in}$ = the current input to the logger.

BAD ORIGINAL

where IREF = 100 μA and K = +1.5v/decade, the overall equation for the preamp and logger may be shown to be:

$$E_o \quad -4.5v \quad -1.5 \, \log_{10} \frac{1000 I_{in}}{I_{REF}} \quad \text{(Equation 3)}$$

$$\text{or } E_o \quad -4.5v \quad +1.5 \, \log_{10} \frac{IREF}{1000 \, I_{in}} \quad \text{(Equation 4)}$$

where $I_{in}$ = input current to the preamplifier.

Neglecting errors due to $V_{os}$ of A, the $V_{os}$ of Q3A and Q3B and small (but known) errors in the auto-zero loop:

$$E_o = 4.5v + 1.5 \, (\log_{10} I_{REF} - \log_{10} 1000 - \log_{10} I_{in})$$
(Equation 5)

$$E_o = -4.5v + 1.5 \, (\log_{10} I_{REF} - 3 - \log_{10} I_{in})$$
(Equation 6)

If IREF and $I_{in}$ are both in μA, $E_o$ becomes the output from the logger A2 and the following transfer table can be realized:

TABLE I

| $I_{in}$ | $E_o$ |
|---|---|
| 100na | -4.5v |
| 10na | -3.0v |
| 1na | -1.5v |
| 100pa | 0v |
| 10pa | +1.5v |
| 1pa | +3.0v |
| .1pa | +4.5v |

Note that in the absence of any input signal or dark current $I_{in} = 0$, ideally. However, the log of zero is negative infinity thus causing $E_o$ to attempt to go to positive infinity for $I_{in} = 0$, but A2 would of course saturate at less than +9v of output. In order for the circuit to function under these real world restraints, it is made to auto-zero with the output at a nominal +4.5v with the equivalent of a 0.1 pico ampere input, or two decades below the minimum signal. This causes a known (and correctable) 1% log conformity error at minimum input which is easily compensated in post-processing, either by analog or digital curve correction as will be appreciated.

When the auto-zero loop is closed by the AZRO control signal to s1 (see Figure 5), integrator A3 is driven so as to cause equilibrium, where its negative input is equal to the positive input of +4.5v (equivalent to 0.1 picoamperes input).

It can be shown that the approximately 20 pico amperes of F.E.T. gate leakage is also removed by the auto-zero loop. When the loop is closed, the only major error is the 0.1 pico ampere bias, e.e., zero input from the diode plus the gate leakage is made to equal 0.1 p.a. The photodiode sees the 100 to 200 µ V mentioned previously.

To adjust the circuit, the auto zero loop is placed in the operative state (i.e. AZRO "on") with no illumination on the diode. The potentio-meter R11 is adjusted for 0 volts ±0.1 volts at the output of A3 in the center of its dynamic range

Once the deterctor is in operation, the loop should accommodate drifts of up to ±1.6 millivolts at the source of Q1B. A temperature shift of ±20°c from 25° c ambient can be shown to result a nominal required shift of about ±0.5v at A3. Thus, this circuit will comfortably accommodate a ±20°c shift in temperature, when aligned at 25°c, if all other effects are considered to be second order, i.e. shifts in supply voltage, changes in the values of resistances and offsets in A1 - A3 are of the order of 15 μ V°c. The actual anticipated temperature shift from ambient is expected to be half this value, or ±10°c.

Another important drift factor is due to discharge of C4 during the period when A3 is holding. If C4 is assumed to be charged to +4.5 volts at the right end, and -5v at the left end, the total charge is 9.5v. A good estimate for the internal resistance of C4 is 100,000 megohms, when mounted on a clean, conformally coated p.c. board thus making a potential leakage current of 95 pico amps. The input current of A4 at 35°c is typically about 400 pico amps, as is the leakage current of S1. If all effects go in the same direction, the worst-case drift can be calculated as about 2.7 millivolts/second. Thus causes a shift at Q1B of about 0.9 microvolts/second (R3 = 100 ohms and R13 = 300,000 ohms). At 35°c, this results in an equivalent input drift of about 0.36 pico amps/second.

Since scan cycles in modern CT scanners are expected not to exceed 10 seconds, the total expected drift would be approximately 3.6 pico amps, or 36% of the minimum signal. Although the change is significant, it can be measured (known a priori) for a given detector. It is in the form of a "weak" exponential added to a linear drift, and is small, and can, therefore, be minimized by appropriate computer processing of the output data using known techniques. Generally, it is expected that such drifts will add in r.m.s. fashion. Since there are many (e.g. 600) detectors in a scanner, the overall effect of the uncompensated r.m.s. of many detectors.

S2 is the integrator reset, and S3, the output port. Their operation is conventional in the CT scanner art and, in fact, the output of A2 may be processed in another fashion if desired as will be appreciated. R10 is the point at which a logged reference detector signal is injected, to do log subtractive source intensity normalization as will be apparent to those familiar with CT scanners.

In operation, the output electrical signal from logger A2 is generated as a function of both the photodiode input and the compensation input from A3. In turn, the compensation signal is generated as a function of the photodiode input during the time when the photodiode is dark so as to then substantially compensate for erroneous dark currents. The required compensation signal is thereafter remembered or maintained by capacitor C4 at the just previously attained value when the photodiode is illuminated and switch S1 is opened so as to temporarily disable the auto-zero loop. This operation is repeated in synchronism with the periodic and repetitive light bursts incident upon the photodiode as in, for example, a CT scanner application. Preferably, the logger A2 is included within the auto-zero loop so as to automatically and simultaneously compensate for the offset errors of the logging stage as well.

CLAIMS

1. Apparatus for reducing errors in photon measurements made with a photoelectric transducer having a variable offset component in its output electrical signal and which transducer is sometimes exposed to a source of photons, said apparatus comprising:

a signal amplifier circuit having an input connected to receive the electrical output signal of said photoelectric transducer, including said variable offset component and to provide a corresponding output, and

a sample-and-hold feedback circuit connected to receive the output of said signal amplifier circuit and to sample same only during periods when said transducer is not exposed to said source of photons and to thereafter provide and maintain a respectively corresponding output feedback signal during periods when the transducer is exposed to the source of photons,

said sample-and-hold feedback circuit having its output signal connected to control said signal amplifier circuit such that its output is compensated for said variable offset component.

2. Apparatus as in claim 1 wherein said signal amplifier comprises:

a linear preamplifier stage having an input and an output, and

an impedance isolation circuit connecting the output of the linear preamplifier stage to the input of the nonlinear amplifier stage.

3. Apparatus as in claim 1 or 2 wherein said sample-and-hold feedback circuit includes:

a manually adjustable bias circuit connected to permit adjustment of the quiescent feedback signal to a value that approximately compensates said variable offset component at a predetermined operating condition of the photoelectric transducer.

4. Apparatus as in claim 2 wherein said linear preamplifier comprises:

an operational amplifier having an input and an output,

a pair of FETs (a) with one FET having a gate electrode connected to said photoelectric transducer, a source electrode connected to a degenerative feedback impedance and a drain electrode connected to the input of the operational amplifier and (b) with the other FET connected as a constant current load to the drain electrode of said one FET.

5. A method of compensating for the temperature sensitive dark current component of the electrical signal of a photodiode, said method comprising the steps of:

generating an output electrical signal as a function of both the photodiode electrical signal and at least one compensation signal,

generating said compensation signal as a function of said photodiode electrical signal during a time when the photodiode is dark so as to then substantially compensate for erroneous components thereof,

maintaining the just previously attained value of said compensation signal when the photodiode is illuminated, and

- 22 -

0026108

periodically repeating the above steps in synchronism with illumination of said photodiode during successive time intervals.

6. A method as in claim 5 wherein the first-mentioned said generating step comprises linear amplification followed by nonlinear logarithmic amplification.

7. A method as in claim 5 or 6 further comprising the step of:

manually adjusting the quiescent value of said compensation signal so as to approximately compensate said output signal at predetermined operating conditions.

8. A light measuring photodiode circuit imposing substantially zero, said circuit comprising;

a photodiode,

an amplifier circuit having an input connected across said photodiode and having an offset input voltage drop at said input and thus appearing across said photodiode which can be controlled in magnitude to be substantially zero by a provided compensating input signal, said amplifier circuit also having an output providing a light measurement signal, and

a sample-and-hold integrator circuit connected to sample the light measurement signal

0026108

when the photodiode is not illuminated and to provide said compensating input signal at a magnitude so as to cause said offset input voltage to be substantially zero,

said sample-and-hold integrator circuit thereafter substantially maintaining said compensating input signal at its last attained value when the photodiode is illuminated.

9. A light measuring photodiode circuit as in claim 8 wherein said amplifier circuit comprises a nonlinear amplifier having a logarithmic-related transfer function.

Fig.1

Fig. 2

Fig.3

Fig.4

Fig.5

0026108